(19) Europäisches Patentamt
European Patent Office
Office européen des brevets

(11) **EP 4 307 546 A2**

(12) **EUROPEAN PATENT APPLICATION**

(43) Date of publication:
**17.01.2024 Bulletin 2024/03**

(21) Application number: **23213409.8**

(22) Date of filing: **24.01.2022**

(51) International Patent Classification (IPC):
**H02M 3/07** *(2006.01)*

(52) Cooperative Patent Classification (CPC):
**H02M 3/01; H02M 1/0095; H02M 3/07; H02M 3/158**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.02.2021 CN 202110181728**

(62) Document number(s) of the earlier application(s) in
accordance with Art. 76 EPC:
**22152905.0 / 4 040 658**

(71) Applicant: **Delta Electronics (Shanghai) Co., Ltd.
Shanghai 201209 (CN)**

(72) Inventors:
• **YE, Yiqing
Shanghai 201209 (CN)**
• **ZHOU, Yuan
Shanghai 201209 (CN)**
• **BAO, Huayao
Shanghai 201209 (CN)**

(74) Representative: **SSM Sandmair
Patentanwälte Rechtsanwalt
Partnerschaft mbB
Joseph-Wild-Straße 20
81829 München (DE)**

Remarks:
This application was filed on 30-11-2023 as a
divisional application to the application mentioned
under INID code 62.

(54) **NON-ISOLATED HYBRID RESONANCE CIRCUIT**

(57) The disclosure provides a non-isolated hybrid resonance circuit for powering a load by converted voltage, including: a full-wave rectifier circuit connected in parallel to the load, and having a first and second rectifying branch connected in parallel, each rectifying branch having a rectifying switch and a winding connected in series; a first switching circuit connected between the first end of the power supply and the first end of the load, and including a first and second switch connected in series; and a first resonant unit electrically coupled between the first connection node formed by the first and second switch connected in series and the midpoint of the first rectifying branch, wherein the windings of the first and second rectifying branches are coupled to each other. The conversion circuit provided by the disclosure can realize an odd voltage conversion ratio, and can reduce loss and volume of the transformer.

FIG. 2A

**Description**

**FIELD**

The disclosure relates to a conversion circuit for converting a voltage of a power supply and powering a load by the converted voltage, and particularly to a non-isolated hybrid resonance circuit.

**BACKGROUND**

Research data of the Chinese Data Center Technology Committee shows that a total power consumption of the Chinese Data Center in 2016 exceeds 120 billion Kw/h. With more services supported by the data center, computing load and scale of the data center will continuously keep a high growth. In order to enhance a computing density of the data center, power of the single rack is also increased. In the traditional rack, an AC-UPS for powering the rack is located outside the rack, and a DC distribution bus voltage inside is 12V, and is relatively stable. However, when the power of the single rack exceeds 15kW, a current through 12V DC distribution bus is significantly increased, thereby largely reducing efficiency, and increasing heat dissipation cost, and cost of cables and connectors. Therefore, in the novel electric power transmission architecture, the DC distribution bus voltage inside the rack is increased to 48V, and meanwhile, the AC-UPS is replaced with a DC-UPS mounted inside the rack, and directly connected to 48V DC distribution bus. This significantly reduces a disribution bus current, improves power efficiency of the data center, and reduces cost of electricity, heat dissipation cost and distribution bus cost, thereby reducing a total cost of ownership of the data center.

It can be seen that in the novel electric power transmission architecture, a voltage conversion ratio between a bus and a processor chip is significantly incresed, and a voltage regulation module (VRM) between the DC bus and the processor chip has an extremely high requirement for efficiency. In such conditions, the 48V VRM converting power from the DC distribution bus to the processor chip faces a huge challenge when the requiremnent for both of a high power density and a high power conversion efficiency needs to be satisfied.

Generally, the 48V VRM is a two-level cascaded conversion structure. In this structure, an input voltage is first reduced, and then regulated. For example, the first level converter uses an efficient DC transformer to converter an 48V bus voltage (Uin) to a low intermediate bus voltage (Uib), such as, 4V. The second level converter uses a multi-phase interleaved BUCK converter, and the BUCK is controlled to output a voltage Uo with a closed loop, thereby ensuring power supply for the load (e.g., the processor chip).

An LLC series resonance circuit is often used for the first level converter of the 48V VRM. However, the LLC circuit has some defects. All energy conversion must be through the transformer. Switches at the primary side of the transformer are responsible for producing excitation current through a primary winding. A secondary winding induces excitation current through the primary winding. Then the power is outputted to a final load through a rectifier. During this process, the switches at the primary side of the transformer only produce an excitation current, and the excitation current itself does not flow to a load, but return to an input. As a result, all load current is supplied by a secondary circuit, so current stresses of the secondary winding and the rectifier are relatively large. In conclusion, the LLC circuit can realize a high voltage conversion ratio, while realizing ZVS(zero voltage switching). However, as all energy of the LLC cicuit is delivered through the transformer, the effiency can not be very high. And in the full-wave rectifier circuit, only one winding works in each half period, such that another winding is idle.

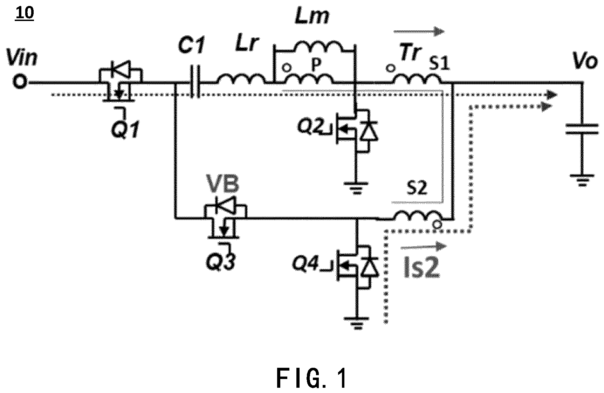

When isolation is unnecessary in the system, a non-isolated LLC circuit 10 shown in FIG. 1 also can be used. In FIG. 1, a turn ratio of windings P, S1 and S2 of a tranformer is N:1:1, a switching frequency fs is equal to a resonant frequency fr, and a magnetic inductance on the transformer is Lm. As shown in FIG. 1, when the non-isolated LLC circuit works, in a positive half period, switches Q1 and Q4 are turned on, and switches Q2 and Q3 are turned off. Here, an inductor Lr and a capacitor C1 resonate, and the resonant frequency is $fr = 1/\left(2\pi \times \sqrt{Lr \times C1}\right)$, while an excitation current $I_{Lm}$ rises linearly. At this time, a resonant current $I_{Lr}$ passes through the primary winding P, and then is injected into one end Vo of a load after passing through the secondary winding S1. Therefore, a primary current of the transformer of the circuit flows to a load, instead of directly returning to one end Vin of a power supply. As compared to the LLC, it is unnecessary for the transformer to induce all load current, so an induced current of the transformer is decreased, while a current flowing the switches is also decreased, causing reduction of loss. Meanwhile, the secondary winding S2 induces excitation from the primary winding P and the secondary winding S1, and induces (N+1) times of current. During this process, the secondary winding S1 also functions as an excitation winding, and in the case of the same excitation ratio of the transformer, the number of turns of the primary winding P can be reduced, thereby reducing an on resistance and an on loss of the primary winding P. A soft switching process is after the positive half period, and during this process, the excitation current charges parasitic capacitance of the switches Q1 and Q4, and parasitic capacitance of the switches Q2 and Q3 is discharged, thereby realizing soft switching. Then, during a negative half period, the switches Q2 and Q3 are turned on, and the switches Q1 and Q4 are turned off. This process is substantial consistent with the process of the positive half period.

As seen from the switching process, the circuit realizes soft switching and a high voltage conversion ratio, and the primary excitation current flows to the load. Meanwhile, an idle secondary side of the transformer is also used repeatedly as an excitation coil of the transformer, thereby reducing the number of turns and a resistance of the winding P. When the switching frequency fs is equal to the resonant frequency fr, a voltage conversion ratio is (2N+2+2):1. As compared to the LLC, the circuit reduces a turn ratio of the transformer. Although the non-isolated LLC reduces the number of turns of the transformer, the voltage conversion ratio can only be an even number, which can not satisfy the requirement of the voltage conversion ratio to be an odd number.

Therefore, it is still desired for a new non-isolated resonance circuit topology capable of realizing an odd voltage conversion ratio, and reducing loss of the transformer.

**SUMMARY**

An object of the disclosure is to solve the problem that the non-isolated LLC circuit cannot realize an odd voltage conversion ratio, and provides a non-isolated hybrid resonance conversion circuit capable of realizing an odd voltage conversion ratio while reducing loss and volume of the transformer.

According to one aspect of the disclosure, provided is a conversion circuit for converting a voltage of a power supply and powering a load by the converted voltage, the power supply and the load each comprising a first end and a second end, and the second end of the power supply being connected to the second end of the load, the conversion circuit comprising: a full-wave rectifier circuit connected in parallel to the load having a first rectifying branch and a second rectifying branch connected in parallel, the first rectifying branch having a first rectifying switch and a first winding connected in series, the first rectifying switch and the first winding being connected to form a first midpoint, the second rectifying branch having a second rectifying switch and a second winding connected in series, the second rectifying switch and the second winding being connected to form a second midpoint, wherein the first winding and the second winding are coupled to each other; a first switching circuit being connected between the first end of the power supply and the first end of the load, and comprising a first switch and a second switch connected in series to form a first connection node; and a first resonant unit coupled between the first connection node and the first midpoint.

Alternatively, the conversion circuit of the disclosure further comprises a third winding connected with the first resonant unit in series and electrically coupled between the first connection node and the first midpoint, wherein the third winding, the first winding and the second winding are coupled to one another.

Alternatively, in the conversion circuit of the disclosure, the first resonant unit comprises an inductor and a capacitor connected in series or in parallel.

Alternatively, in the conversion circuit of the disclosure, the first switching circuit further comprises (2m-2) switches connected in series to the first switch and the second switch, such that the first switching circuit comprises 2m switches connected in series, wherein adjacent switches of the 2m switches are connected to form connection nodes, the conversion circuit further comprises: (m-1) resonant units, the (m-1) resonant units and the first resonant units forming m resonant units, the x-th resonant unit of the m resonant units being connected in series to the third winding and being electrically coupled between the connection node of the (2x-1)th switch and the 2x-th switch of the 2m switches and the first midpoint; and (m-1) energy storage units each comprising an energy storage element, the k-th energy storage unit of the (m-1) energy storage units having one end connected to a connection node of the 2k-th switch and the (2k+1)th switch of the 2m switches, and the other end connected to the second rectifying branch, where m, x and k are integers, m≥2, 1≤x≤m and 1≤k≤(m-1).

Alternatively, in the conversion circuit of the disclosure, the energy storage element is a capacitor.

Alternatively, in the conversion circuit of the disclosure, each energy storage unit further comprises an inductor connected in series to the capacitor in the corresponding energy storage unit.

Alternatively, in the conversion circuit of the disclosure, wherein the other end of each of the (m-1) energy storage units is connected to one of: the first end of the load; the second midpoint; and the second end of the load.

Alternatively, in the conversion circuit of the disclosure, the first switching circuit further comprises (m-2) switches connected in series to the first switch and the second switch, such that the first switching circuit comprises m switches connected in series, wherein adjacent switches of the m switches are connected to form connection nodes, the conversion circuit further comprises (m-2) resonant units, the (m-2) resonant units and the first resonant unit forming (m-1) resonant units, the (2y-1)th resonant unit of the (m-1) resonant units is connected in series to the third winding and electrically coupled between the connection node of the (2y-1)th switch and the 2y-th switch of the m switches and the first midpoint, the 2z-th resonant unit of the (m-1) resonant units has one end connected to the connection node between the 2z-th switch and the (2z+1)th switch of the m switches, and the other end connected to the second rectifying branch, and m is an odd number, y and z are integers, m≥3, 1≤y≤m/2 and 1≤z≤(m-1)/2.

Alternatively, in the conversion circuit of the disclosure, the other end of the 2z-th resonant unit of the (m-1) resonant units is connected to one of: the first end of the load; the second midpoint; and the second end of the load.

Alternatively, in the conversion circuit of the disclosure, each of the (m-1) capacitors is further connected in series to a fourth winding, and the fourth winding, the first winding and the second winding are coupled to one another.

Alternatively, in the conversion circuit of the disclosure, the 2z-th resonant unit of the (m-1) resonant units is further connected in series to a fifth winding, and the fifth winding, the first winding and the second winding are coupled to one another.

Alternatively, in the conversion circuit of the disclosure, the first switching circuit further comprises a third switch and a fourth switch connected in series to the first switch and the second switch, the second switch and the third switch being connected to form a second connection node, and the third switch and the fourth switch being connected to form a third connection node, the conversion circuit further comprises: a first energy storage unit comprising an energy storage element, and having one end connected to the second connection node, and the other end connected to the second rectifying branch; and a second resonant unit electrically coupled between the second connection node and the first midpoint.

Alternatively, the conversion circuit of the disclosure further comprises a common inductor via which the first resonant unit and the second resonant unit are connected to the first midpoint.

Alternatively, in the conversion circuit of the disclosure, the first resonant unit and the second resonant unit share a resonant inductor.

Alternatively, the conversion circuit of the disclosure further comprises a third winding, wherein the first resonant unit is connected in series to the third winding and electrically coupled between the first connection node and the first midpoint , the second resonant unit is connected in series to the third winding and electrically coupled between the second connection node and the first midpoint, and the third winding, the first winding and the second winding are coupled to one another.

Alternatively, in the conversion circuit of the disclosure,the first switching circuit further comprises a third switch and a fourth switch connected in series to the first switch and the second switch, the second switch and the third switch being connected to form a second connection node, and the third switch and the fourth switch being connected to form a third connection node, the conversion circuit further comprises: a first energy storage unit comprising an energy storage element, and having one end connected to the second connection node, and the other end connected to the second rectifying branch; and a second resonant unit electrically coupled between the third connection node and the first midpoint.

Alternatively, the conversion circuit of the disclosure further comprises a third winding electrically connected in series to the first resonant unit and coupled between the first connection node and the first midpoint; and a sixth winding electrically connected in series to the second resonant unit and coupled between the third connection node and the first midpoint; wherein the sixth winding, the third winding, the first winding and the second winding are coupled to one another.

Alternatively, in the conversion circuit of the disclosure, the first resonant unit and the second resonant unit have the same resonant frequency.

Alternatively, the conversion circuit of the disclosure further comprises a second switching circuit and a third resonant unit, wherein the second switching circuit is connected in parallel to the first switching circuit, and comprises a fifth switch and a sixth switch connected in series to form a fourth connection node, the third resonant unit electrically coupled between the fourth connection node and the second midpoint.

Alternatively, the conversion circuit of the disclosure further comprises a third winding electrically connected in series to the first resonant unit and coupled between the first connection node and the first midpoint; and a seventh winding electrically connected in series to the third resonant unit and coupled between the fourth connection node and the second midpoint.

## BRIEF DESCRIPTION OF THE DRAWINGS

FIG. 1 illustrates a schematic diagram of a non-isolated LLC circuit in the prior art.
FIG. 2A illustrates an exemplary circuit according to a conversion circuit in one embodiment of the disclosure.
FIG. 2B illustrates a current flow path in a first half period of the circuit in FIG. 2A.
FIG. 2C illustrates a current flow path in a second half period of the circuit in FIG. 2A.
FIG. 2D illustrates waveforms of currents or voltages of partial elements in one working period of the circuit in FIG. 2A.
FIG. 3 illustrates an exemplary circuit according to a conversion circuit in another embodiment of the application.
FIG. 4 illustrates an exemplary circuit according to a conversion circuit in another embodiment of the application.
FIG. 5 illustrates an exemplary circuit according to a conversion circuit in another embodiment of the application.
FIG. 6 illustrates an exemplary circuit according to a conversion circuit in another embodiment of the application.
FIG. 7 illustrates an exemplary circuit according to a conversion circuit in another embodiment of the application.

FIG. 8 illustrates an exemplary circuit according to a conversion circuit in another embodiment of the application.
FIG. 9 illustrates an exemplary circuit according to a conversion circuit in another embodiment of the application.
FIG. 10 illustrates an exemplary circuit according to a conversion circuit in another embodiment of the application.
FIG. 11 illustrates an exemplary circuit according to a conversion circuit in another embodiment of the application.
FIG. 12 illustrates an exemplary circuit according to a conversion circuit in another embodiment of the application.
FIG. 13 illustrates an exemplary circuit according to a conversion circuit in another embodiment of the application.

## DETAILED DESCRIPTION

Now the respective embodiments of the application are described in details with reference to the drawings, and one or more examples of the respective embodiments of the application are illustrated in the drawings. In the below descriptions of the drawings, the same reference sign indicates the same or similar components. In the below text, difference of the respective embodiments is only described. Each example is provided to aim to explain the technical solution, but it does not mean to limit the subject matter claimed by the application. In addition, as a part of one embodiment, the explained or described features can be applied to other embodiments, or combined with other embodiments to produce further examples. Hereinafter detailed explanations are made to intent to include such modifications and variations.

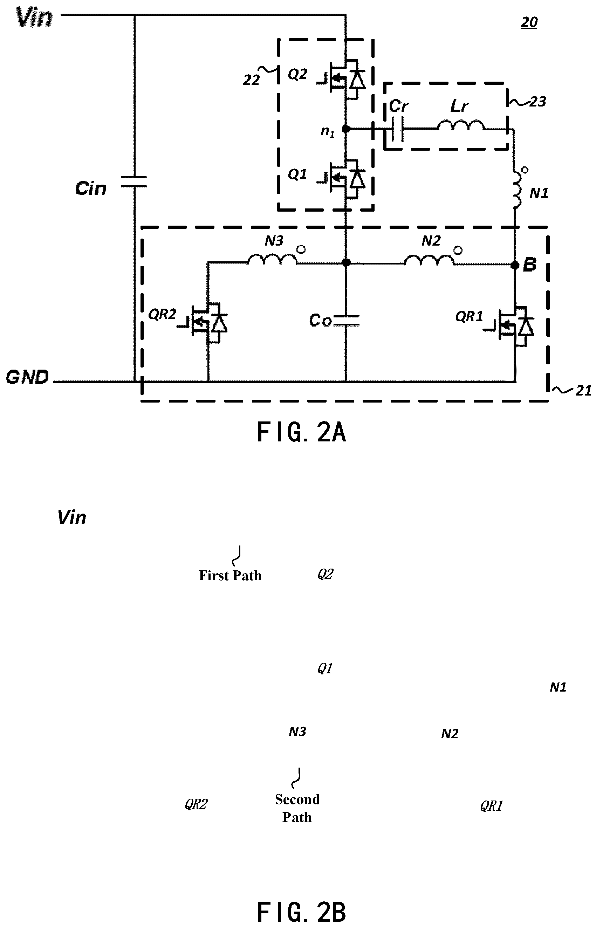

As shown in FIG. 2A, FIG. 2A illustrates an exemplary circuit according to a conversion circuit 20 in a first embodiment of the application. The circuit 20 receives an input voltage Vin from a power supply, the input voltage Vin is converted, and the converted voltage is outputted to a load. A capacitor Cin is connected in parallel to the power supply, and a capacitor Co is connected in parallel to the load.

The circuit 20 includes a full-wave rectifier unit 21, a switching circuit 22, a resonant unit 23, and a winding N1. The full-wave rectifier unit 21 is formed of a first rectifying branch and a second rectifying branch connected in parallel to the capacitor Co, the first rectifying branch has a winding N2 and a rectifying switch QR1 connected in series, and the second rectifying branch has a winding N3 and a rectifying switch QR2 connected in series. The switching circuit 22 includes switches Q1 and Q2 connected in series, and the resonant unit 23 includes a resonant capacitor Cr and a resonant inductor Lr connected in series. The winding N1 and the windings N2 and N3 in the full-wave rectifier unit 21 are coupled to one another, thereby forming a transformer.

The power supply and the load each have a first end and a second end, and the second end of the power supply is connected to the second end of the load (for example, grounded, i.e., connected to a ground end GND in FIG. 2A). The switching circuit 22 is connected between the first end of the power supply and the first end of the load. The full-wave rectifier unit 21 is connected between the first end and the second end of the load, i.e., as shown in FIG. 2A, the first rectifying branch and the second rectifying branch connected in parallel are further connected to the capacitor Co in parallel.

In the circuit 20, the resonant unit 23 is connected in series to the winding N1, such that a branch formed by the resonant unit 23 and the winding N1 connected in series has one end connected to a connection node formed by the switches Q1 and Q2 connected in series (i.e., a connection node $n_1$ in FIG. 2A), and the other end connected to a connection node formed by connecting the rectifying switch QR1 and the winding N2 in series (i.e., a connection node B in FIG. 2A).

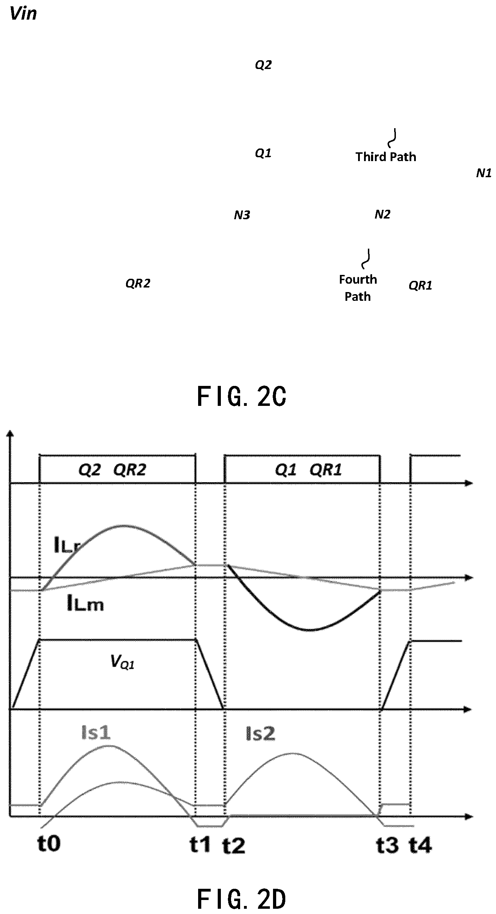

Hereinafter working process of the circuit 20 is described combining with FIGS. 2B-2D. FIG. 2B illustrates a current flow path of the circuit 20 in a first half period. FIG. 2C illustrates a current flow path of the circuit 20 in a second half period. FIG. 2D illustrates waveforms of currents or voltages of partial elements in one working period of the circuit 20. In FIG. 2D, $I_{Lr}$ represents a current flowing through the resonant unit 23, $I_{Lm}$ represents a current flowing through magnetic inductance of the transformer, $I_{S1}$ and $I_{S2}$ represent currents flowing through the windings N2 and N3, respectively, and $V_{Q1}$ represents a voltage across the switch Q1.

In one working period of the circuit 20, during a time period t0-t1 of the first half period, the switch Q2 and the rectifying switch QR2 are turned on, and the switch Q1 and the rectifying switch QR1 are turned off. During a time period t2-t3 of the second half period, the switch Q1 and the rectifying switch QR1 are turned on, and the switch Q2 and the rectifying switch QR2 are turned off. That is, the switch Q2 and the rectifying switch QR2 are turned on complementary to the switch Q1 and the rectifying switch QR1, and a duty ratio is about 0.5.

Next, in the circuit 20, taking a switching frequency fs equal to a resonant frequency fr, and a turn ratio of the winding N1, the winding N2 and the winding N3 in the transformer to be N: 1:1 as an example, working process of the circuit 20 is described.

During the time period t0-t1 of the first half period, a working state of the circuit 20 is shown in FIG. 2B. Here the switch Q2 and the rectifying switch QR2 are turned on, and the switch Q1 and the rectifying switch QR1 are turned off. On one hand, the resonant inductor Lr and the resonant capacitor Cr in the resonant unit 23 resonate. The resonant frequency is $fr = 1/\left(2\pi \times \sqrt{Lr \times Cr}\right)$, and a resonant current is i. The resonant current i flows to a load via the winding N1 and the winding N2 along a first path shown in FIG. 2B to supply energy to the load, instead of returning to the power supply. Meanwhile, on the other hand, the winding N3 induces excitation of the winding N1 and the winding N2, and an induced current is (N+1)i, and the induced current flows to the load along a second path shown in FIG. 2B to supply energy to the load end. Therefore, in the first half period, a current flowing to the load is (N+2)i.

During a time period t1-t2 of the first half period, the current flowing through the magnetic inductance charges parasitic capacitance of the switch Q2 and the rectifying switch QR2, and discharges parasitic capacitance of the switch Q1 and the rectifying switch QR1, thereby realizing soft switching.

During the time period t2-t3 of the second half period, a working state of the circuit 20 is shown in FIG. 2C. The switch Q1 and the rectifying switch QR1 are turned on, and the switch Q2 and the rectifying switch QR2 are turned off. On one hand, the resonant current i flows to the load via the winding N1 along a third path shown in FIG. 2C to power the load. Meanwhile, on the other hand, the winding N2 induces excitation of the winding N1, and an induced current is Ni, and the induced current flows to the load along a fourth path shown in FIG. 2C to supply energy to the load. Therefore, in the second half period, a current flowing to the load is (N+1)i.

As can be seen, in an entire working period of the circuit 20, a voltage conversion ratio is (2N+1+2): 1, where the factor 2N is a voltage conversion ratio contributed by the winding N1 of the transformer, the factor 1 is a voltage conversion ratio contributed by using an idle winding of the transformer as excitation, and the factor 2 is a voltage conversion ratio contributed by an excitation current directly flowing to the load.

As compared to the non-isolated LLC circuit in the prior art shown in FIG. 1, difference of the circuit 20 lies in that a primary switch is connected to the load. Therefore, such circuit topology of the circuit 20 can realize an odd voltage conversion ratio while also having a primary current directly flowing to the load, and using the idle winding, thereby realizing advantages of a high efficiency and a high voltage conversion ratio.

The voltage conversion ratio of such circuit topology of the circuit 20 is odd, and in the case of the same voltage conversion ratio, the number of turns of the transformer can be reduced. Meanwhile, the current flowing to the winding N1 directly flows to the load, thereby further reducing loss and volume of the transformer.

Although the resonant unit 23 of the circuit 20 is formed by the resonant capacitor Cr and the resonant inductor Lr connected in series, the application is not limited thereto. For example, the resonant unit 23 also can be formed by the resonant capacitor Cr and the resonant inductor Lr connected in parallel.

Although the switching circuit 22 of the circuit 20 is formed by a single switch Q1 and a single switch Q2 connected in series, in some another embodiments, each of the switches Q1 and Q2 is further formed of a plurality of switching elements connected in series to reduce voltage stress of the single switch, or further formed of a plurality of switching elements connected in parallel to increase current flowing capacity of the switch.

Taking the turn ratio of the winding N1, the winding N2 and the winding N3 to be N: 1:1 as an example, the voltage conversion ratio of the circuit 20 is described. In a more general case, the voltage conversion ratio of the circuit 20 can be determined by formula (1):

$$[\frac{(K1+K2)}{K3} + \frac{K1}{2K2} + 2] \: : 1 \qquad\qquad (1)$$

In the formula (1), K1, K2 and K3 represent the specific number of turns of the winding N1, the winding N2 and the winding N3, respectively.

Although the circuit 20 describes the transformer formed by the winding N1, the winding N2 and the winding N3 coupled to one another, it is unnecessary to dispose the winding N1, i.e., the resonant unit can be directly coupled between the connection node $n_1$ and the connection node B. Here since the winding N1 (i.e., K1=0) does not exist, the realized voltage conversion ratio can be determined by the formula (1). For example, when the turn ratio of the winding N2 and the winding N3 is 1:1, and the winding N1 does not exist, it can be determined that the voltage conversion ratio of the circuit 20 is 3:1 by substituting the specific turn ratio into the formula (1).

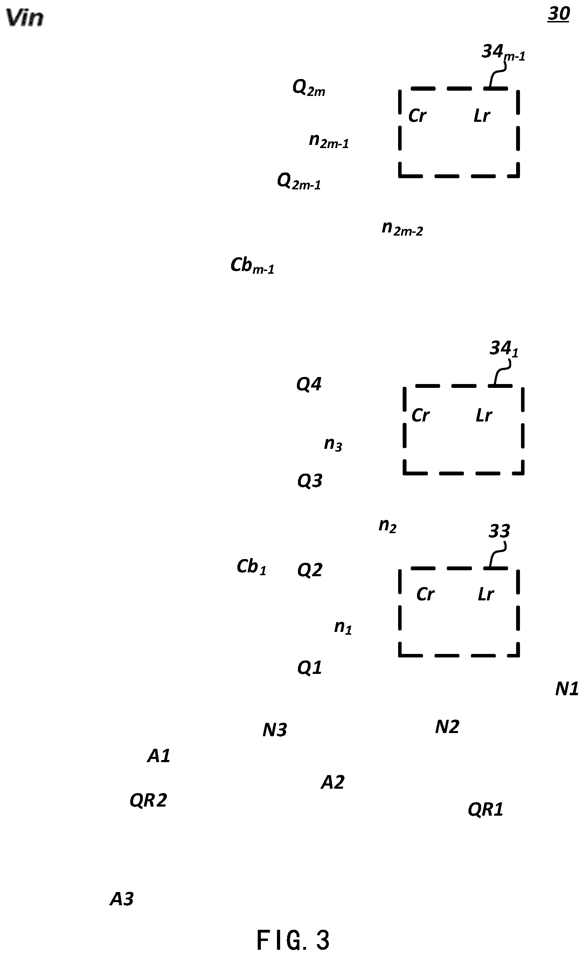

The circuit 20 described in FIGS. 2A-2D can be expanded to change the voltage conversion ratio. FIG. 3 illustrates a circuit 30 according to another embodiment of the application. Difference between the circuit 30 and the circuit 20 lies in that, in addition to the original two switches Q1 and Q2, the switching circuit further including (2m-2) switches, for example, switches Q3, Q4, ..., $Q_{2m-1}$ and $Q_{2m}$ shown in FIG. 3. The expanded (2m-2) switches (Q3, Q4, ..., $Q_{2m-1}$ and $Q_{2m}$) are connected in series to the original two switches Q1 and Q2, such that the switching circuit includes 2m switches connected in series, where m is an integer, and m≥2.

The circuit 30 further includes (m-1) energy storage elements (for example, blocking capacitors ($Cb_1$ to $Cb_{m-1}$) as the energy storage elements shown in FIG. 3) and (m-1) additional resonant units 34 (for example, $34_1$ to $34_{m-1}$

shown in FIG. 3). Therefore, the circuit 30 have a total of m resonant units. The m resonant units have the same resonant frequency. And resonance parameters of the m resonant units can be the same or different. Similar with the resonant unit 33, each of the resonant units 34 includes the resonant capacitor Cr and the resonant inductor Lr.

Therefore, the conversion circuit of the circuit 30 in FIG. 3 can be described as blow. The switching circuit has 2m switches connected in series, where m is an integer, and m $\geq$2. The adjacent two switches of the 2m switches are connected to form a connection node, so there are (2m-1) connection nodes. For example, FIG. 3 illustrates a connection node $n_1$ formed by connecting the switches Q1 and Q2 in series, a connection node $n_2$ formed by connecting the switches Q2 and Q3 in series, a connection node $n_3$ formed by connecting the switches Q3 and Q4 in series, a connection node $n_{2m-2}$ formed by connecting the switch $Q_{2m-2}$ and the previous switch (not shown) in series, and a connection node $n_{2m-1}$ formed by connecting the switches $Q_{2m-1}$ and $Q_{2m}$ in series.

A subscript of the connection node is increased successively along a direction away from the load. For example, as shown in FIG. 3, the connection node between the switches Q1 and Q2 is closest to the load, so the connection node between the switches Q1 and Q2 is the first connection node, i.e., the connection node $n_1$, the connection node between the switch Q2 and the next switch Q3 adjacent to the switch Q2 is the second connection node, i.e., the connection node $n_2$, and so on, and the connection node between the switches $Q_{2m-1}$ and $Q_{2m}$ is the (2m-1)th connection node, i.e., the connection node $n_{2m-1}$.

Each of the m resonant units is connected between the corresponding connection node with an odd subscript (i.e., the connection nodes $n_1$, $n_3$, ..., $n_{2m-1}$) and a midpoint B of the first rectifying branch of the full-wave rectifier unit after being connected in series to the winding N1. One end of each of the (m-1) capacitors Cb is connected to the corresponding connection node with an even subscript (i.e., the connection nodes $n_2$, ..., $n_{2m-2}$), and the other end is connected to the second rectifying branch of the full-wave rectifier unit.

In other words, of the m resonant units, the x-th resonant unit, after being connected in series to the winding N1, has one end connected to the connection node between the (2x-1)th switch and the 2x-th switch of the 2m switches, where x is an integer, and 1$\leq$x$\leq$ m.

For example, when x=1, the first (x) resonant unit (the resonant unit 33 in FIG. 3) of the m resonant units has one end connected to the connection node $n_1$ between the first (2x-1) switch (the switch Q1 in FIG. 3) and the second (2x) switch (the switch Q2 in FIG. 3), and the other end connected to the midpoint B of the first rectifying branch of the full-wave rectifier unit after being connected in series to the winding N1. For another example, when x=2, the second (x) resonant unit (the resonant unit $34_1$ in FIG. 3) of the m resonant units has one end connected to the connection node $n_3$ between the third (2x-1) switch (the switch Q3 in FIG. 3) and the fourth (2x) switch (the switch Q4 in FIG. 3), and the other end connected to the midpoint B of the first rectifying branch of the full-wave rectifier unit after being connected in series to the winding N1. For another example, when x=m, the m-th (x) resonant unit (the resonant unit $34_{m-1}$ in FIG. 3) of the m resonant units has one end connected to the connection node $n_{2m-1}$ between the (2m-1)th (2x-1) switch (the switch $Q_{2m-1}$ in FIG. 3) and the 2m-th (2x) switch (the switch $Q_{2m}$ in FIG. 3), and the other end connected to the midpoint B of the first rectifying branch of the full-wave rectifier unit after being connected in series to the winding N1.

Moreover, of the (m-1) capacitors Cb, the k-th capacitor has one end connected to the connection node between the 2k-th switch and the (2k+1)th switch of the 2m switches, and the other end connected to the second rectifying branch of the full-wave rectifier unit, where k is an integer, and 1$\leq$k$\leq$m-1.

For example, when k=1, the first (k) capacitor (the capacitor $Cb_1$ in FIG. 3) has one end connected to the connection node $n_2$ between the second (2k) switch (the switch Q2 in FIG. 3) and the third switch (the switch Q3 in FIG. 3), and the other end connected to the second rectifying branch of the full-wave rectifier unit. For another example, when k=(m-1), the (m-1)th (k) blocking capacitors (the blocking capacitor $Cb_{m-1}$ in FIG. 3) has one end connected to the connection node $n_{2m-2}$ between the (2m-2)th (2k) switch (the previous switch adjacent to the switch $Q_{2m-1}$ in FIG. 3, not shown) and the (2m-1)th (2k+1) switch (the switch $Q_{2m-1}$ in FIG. 3), and the other end connected to the second rectifying branch of the full-wave rectifier unit.

As described above, the other end of the (m-1) capacitors Cb is connected to the second rectifying branch of the full-wave rectifier unit of the circuit 30. To be specific, the other end of the capacitor Cb can be connected to various positions of the second rectifying branch. For example, as shown in FIG. 3, the other end of the capacitor Cb can be connected to (1) midpoint A1 formed by connecting the winding N3 and the rectifying switch QR2 in series in the second rectifying branch, (2) point A2, i.e., the first end of the load, or (3) point A3, i.e., the second end of the load (for example, a ground end GND).

As for the circuit 30 in FIG. 3, the number of switches in the switching circuit of the circuit 30 is M (i.e., M=2m), and a turn ratio of the winding N1, the winding N2 and the winding N3 of the transformer is N: 1:1. When the other end of the capacitor Cb is connected to the midpoint A1, the voltage conversion ratio is (M$\times$(N+2)-1):1, when the other end of the capacitor Cb is connected to the point A2, the voltage conversion ratio is (M$\times$N+M+1):1, and when the other end of the capacitor Cb is connected to the point A3, the voltage conversion ratio is (M$\times$N+M+1):1, thereby expanding the conversion ratio of the conversion circuit.

Similarly, other suitable turn ratio can be chosen for the winding N1, the winding N2 and the winding N3. In a more general case, when the other end of the capacitor Cb is connected to the midpoint A1, the voltage conversion ratio of the circuit 30 can be determined by formula (2), when the other end of the capacitor Cb is connected to the point A2, the voltage conversion ratio of the circuit 30 can be determined by formula (3), and when the other end of the capacitor Cb is connected to the point A3, the voltage conversion ratio of the circuit 30 can be determined by formula (4):

$$\left[\frac{\frac{M*(K1+K2)}{2}}{K3} + \frac{\frac{M*K1}{2}+\left(\frac{M}{2}-1\right)*K2}{K2} + M\right] : 1 \qquad (2)$$

$$\left[\frac{\frac{M}{2}*K1+\frac{M}{2}*K2-\left(\frac{M}{2}-1\right)*K3}{K3} + \frac{M*K1}{2*K2} + M\right] : 1 \qquad (3)$$

$$\left[\frac{M*(K1+K2)}{2*K3} + \frac{M*K1}{2*K2} + \frac{M}{2} + 1\right] : 1 \qquad (4)$$

In the formulas (2)-(4), K1, K2 and K3 are the number of turns of the winding N1, the winding N2 and the winding N3, respectively, and M is the number of switches in the switching circuit of the circuit 30 (i.e., M=2m). Similarly, it is unnecessary to dispose the winding N1 in some other embodiments.

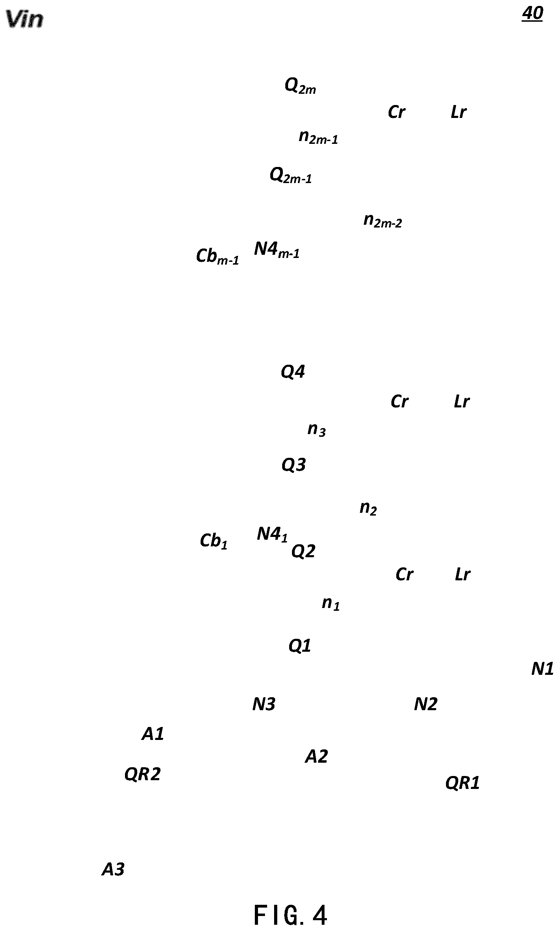

FIG. 3 illustrates that the capacitor Cb is connected to the corresponding connection node with even subscript and the second rectifying branch of the full-wave rectifier unit. In some embodiments, some windings can be further added to change the voltage conversion ratio. For example, FIG. 4 illustrates a circuit 40 according to another embodiment of the application.

Difference between the circuit 40 in FIG. 4 and the circuit 30 in FIG. 3 lies in that in addition to connecting the capacitor Cb as an energy storage element between the second rectifying branch of the full-wave rectifier unit and the connection node with even index, each capacitor Cb is further connected in series to an additional winding N4 (such as windings $N4_1$ and $N4_{m-1}$ shown in FIG. 4).

Here as for the circuit 40 in FIG. 4, the number of switches in the switching circuit of the circuit 40 is M (i.e., M=2m), and a turn ratio of the additional windings N4 ($N4_1$ and $N4_{m-1}$), the winding N1, the winding N2 and the winding N3 of the transformer is N:N: 1:1. When the other end of the capacitor Cb is connected to the midpoint A1, the voltage conversion ratio is ((2M-2)×N+2M-1):1, when the other end of the capacitor Cb is connected to the point A2, the voltage conversion ratio is ((2M-2)×N+2M+1):1, and when the other end of the capacitor Cb is connected to the point A3, the voltage conversion ratio is ((2M-2)×N+2M+1):1, thereby further expanding the conversion ratio of the conversion circuit based on the circuit 30 in FIG. 3.

Similarly, other suitable turn ratio can be chosen for the winding N1, the winding N2, the winding N3 and the winding N4. In a more general case, when the other end of the capacitor Cb is connected to the midpoint A1, the voltage conversion ratio of the circuit 40 can be determined by formula (5), when the other end of the capacitor Cb is connected to the point A2, the voltage conversion ratio of the circuit 40 can be determined by formula (6), and when the other end of the capacitor Cb is connected to the point A3, the voltage conversion ratio of the circuit 40 can be determined by formula (7):

$$\left[\frac{K1+K2}{K3} + \frac{K1}{K2} + M + \frac{\left(\frac{M}{2}-1\right)*(K1+K2)+\sum_{i=1}^{m-1}K4_i}{K3} + \frac{\left(\frac{M}{2}-1\right)*(K1+K3)+\sum_{i=1}^{m-1}K4_i}{K2}\right] : 1 \quad (5)$$

$$\left[\frac{K1+K2}{K3} + M + \frac{\left(\frac{M}{2}-1\right)*(K1+K2-K3)+\sum_{i=1}^{m-1}K4_i}{K3} + \frac{\frac{M}{2}*K1+\sum_{i=1}^{m-1}K4_i}{K2}\right] : 1 \qquad (6)$$

$$\left[\frac{K1+K2}{K3} + \frac{M}{2} + 1 + \frac{\left(\frac{M}{2}-1\right)*(K1+K2)+\sum_{i=1}^{m-1}K4_i}{K3} + \frac{\frac{M}{2}*K1+\sum_{i=1}^{m-1}K4_i}{K2}\right] : 1 \qquad (7)$$

In the formulas (5)-(7), K1, K2 and K3 are the number of turns of the winding N1, the winding N2 and the winding N3, respectively, $K4_i$ is the number of turns of the respective windings N4, and M is the number of switches in the switching circuit of the circuit 40 (i.e., M=2m). Similarly, it is unnecessary to dispose the winding N1 in some other embodiments.

Although FIGS. 3 and 4 illustrate the case where the blocking capacitor Cb serves as an energy storage element, the disclosures are not limited thereto, and the resonant unit also can serve as the energy storage element. Here the capacitor of the resonant unit as the energy storage element functions as the blocking capacitor, and also resonates with the inductor of the resonant unit.

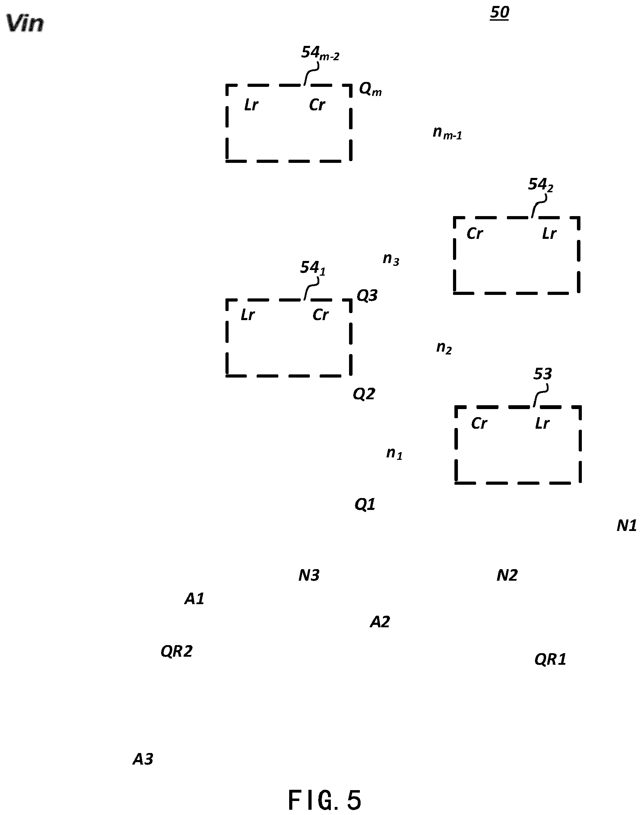

FIG. 5 illustrates a circuit 50 according to another embodiment of the application, and serves as another expanding form of the circuit 20 in FIG. 2.

Difference between the circuit 50 in FIG. 5 and the circuit 20 lies in that in addition to the two switches Q1 and Q2, the switching circuit further includes (m-2) switches, for example, switches Q3, ..., $Q_m$ shown in FIG. 5. The additional (m-2) switches (Q3, ..., $Q_m$) are connected in series to the two switches Q1 and Q2, such that the switching circuit includes m switches connected in series, where m is odd, and m≥3.

Corresponding to the switching circuit of the expanded circuit 50, the circuit 50 further includes (m-2) resonant units 54 (for example, resonant units $54_1$, $54_2$ and $54_{m-2}$ shown in FIG. 5). Therefore, the (m-2) resonant units 54 and the resonant unit 53 together form (m-1) resonant units. The resonant unit 54 includes a resonant capacitor Cr and a resonant inductor Lr. These (m-1) resonant units have the same resonant frequency. And resonance parameters can be the same or different.

Specifically, the conversion circuit of the circuit 50 in FIG. 5 can be described as blow. The switching circuit has m switches connected in series, where m is odd, and m≥3. The adjacent two switches of the m switches are connected to form connection nodes, so there are (m-1) connection nodes. For example, FIG. 5 illustrates a connection node $n_1$ formed by connecting the switches Q1 and Q2 in series, a connection node $n_2$ formed by connecting the switches Q2 and Q3 in series, a connection node $n_3$ formed by connecting the switch Q3 and the previous switch (not shown) in series, and a connection node $n_{m-1}$ formed by connecting the switch $Q_m$ and the previous switch (not shown) in series.

A subscript of the connection node is increased successively along a direction away from the load. For example, as shown in FIG. 5, the connection node between the switches Q1 and Q2 is closest to the load, so the connection node between the switches Q1 and Q2 is the first connection node, i.e., the connection node $n_1$, the connection node between the switch Q2 and the next switch Q3 adjacent to the switch Q2 is the second connection node, i.e., the connection node $n_2$, and so on, and the connection node between the switch $Q_m$ and the previous switch is the (m-1)th connection node, i.e., the connection node $n_{m-1}$.

Each of a part of the (m-1) resonant units in the circuit 50 is connected between the corresponding connection node with an odd subscript and a midpoint B of the first rectifying branch of the full-wave rectifier unit after being connected in series to the winding N1. Each of the other part of the (m-1) resonant units in the circuit 50 has one end connected to the corresponding connection node with an even subscript, and the other end connected to the second rectifying branch of the full-wave rectifier unit.

In other words, of the (m-1) resonant units, the (2y-1)th resonant unit is connected between the connection node of the (2y-1)th switch and the 2y-th switch of the m switches and the midpoint B of the first rectifying branch of the full-wave rectifier unit after being connected in series to the winding N1, where y is an integer, and 1≤y≤m/2.

For example, when y=1, of the (m-1) resonant units, the first (2y-1) resonant unit (the resonant unit 53 in FIG. 5) is connected between the connection node $n_1$ of the first (2y-1) resonant unit (the switch Q1 in FIG. 5) and the second (2y) switch (the switch Q2 in FIG. 5) and the midpoint B of the first rectifying branch of the full-wave rectifier unit after being connected in series to the winding N1. For another example, when y=2, of the (m-1) resonant units, the third (2y-1) resonant unit (the resonant unit $54_2$ in FIG. 5) is connected between the connection node $n_3$ of the third (2y-1) switch (the switch Q3 in FIG. 5) and the fourth (2y) switch (the next switch of the switch Q3) and the midpoint B of the first rectifying branch of the full-wave rectifier unit after being connected in series to the winding N1.

Of the (m-1) resonant units, the 2z-th resonant unit has one end connected to the node between the 2z-th switch and the (2z+1)th switch of the m switches, and the other end connected to the second rectifying branch of the full-wave rectifier circuit, where z is an integer, and 1≤z≤(m-1)/2.

For example, when z=1, of the (m-1) resonant units, the second (2z) resonant unit (the resonant unit $54_1$ in FIG. 5) has one end connected to the connection node $n_2$ between the second (2z) switch (the switch Q2 in FIG. 5) and the third (2z+1) switch (the switch Q3 in FIG. 5), and the other end connected to the second rectifying branch of the full-wave rectifier circuit.

As described above, the other end of the resonant unit is connected to the resonant unit with even subscript in the (m-1) resonant units being connected to the second rectifying branch of the full-wave rectifier unit of the circuit 50. Specifically, the other end of these resonant units can be connected to various positions of the second rectifying branch. For example, as shown in FIG. 5, the other end of these resonant units can be connected to (1) midpoint A1 formed by connecting the winding N3 and the rectifying switch QR2 in series in the second rectifying branch, (2) point A2, i.e., the first end of the capacitor Co, and (3) point A3, i.e., the second end of the capacitor Co (for example, a ground end GND).

As for the circuit 50 in FIG. 5, assuming that a turn ratio of the winding N1, the winding N2 and the winding N3 of the transformer is N: 1:1, when the other end of the resonant unit connected to the even-numbered connection node is connected to the midpoint A1, the voltage conversion unit is ((m-1)×N+2m-1):1, when the other end of the resonant unit connected to the even-numbered connection node is connected to the point A2, the voltage conversion unit is ((m-1)×N+m):1, and when the other end of the resonant unit connected to the even-numbered connection node is connected to the point A3, the voltage conversion unit is ((m-1)×N+m):1, thereby expanding the conversion ratio of the conversion circuit.

Similarly, other suitable turn ratio can be chosen for the winding N1, the winding N2 and the winding N3. In a more general case, when the other end of the resonant unit connected to the even-numbered connection node is connected to the midpoint A1, the voltage conversion ratio of the circuit 50 can be determined by formula (8), when the other end of the resonant unit connected to the even-numbered connection node is connected to the point A2, the voltage conversion ratio of the circuit 50 can be determined by formula (9), and when the other end of the resonant unit connected to the even-numbered connection node is connected to the point A3, the voltage conversion ratio of the circuit 50 can be determined by formula (10):

$$\left[\frac{(m-1)*(K1+K3)}{2*K2} + \frac{(m-1)*(K1+K2)}{2*K3} + m\right] : 1 \qquad (8)$$

$$\left[\frac{(m-1)*K1}{2*K2} + \frac{(m-1)*(K1+K2-K3)}{2*K3} + m\right] : 1 \qquad (9)$$

$$\left[\frac{(m-1)*K1}{2*K2} + \frac{(m-1)*(K1+K2)}{2*K3} + \frac{m+1}{2}\right] : 1 \qquad (10)$$

In the formulas (8)-(10), K1, K2 and K3 are the number of turns of the winding N1, the winding N2 and the winding N3, respectively, and m is the number of switches in the circuit 50. Similarly, it is unnecessary to dispose the winding N1 in some other embodiments.

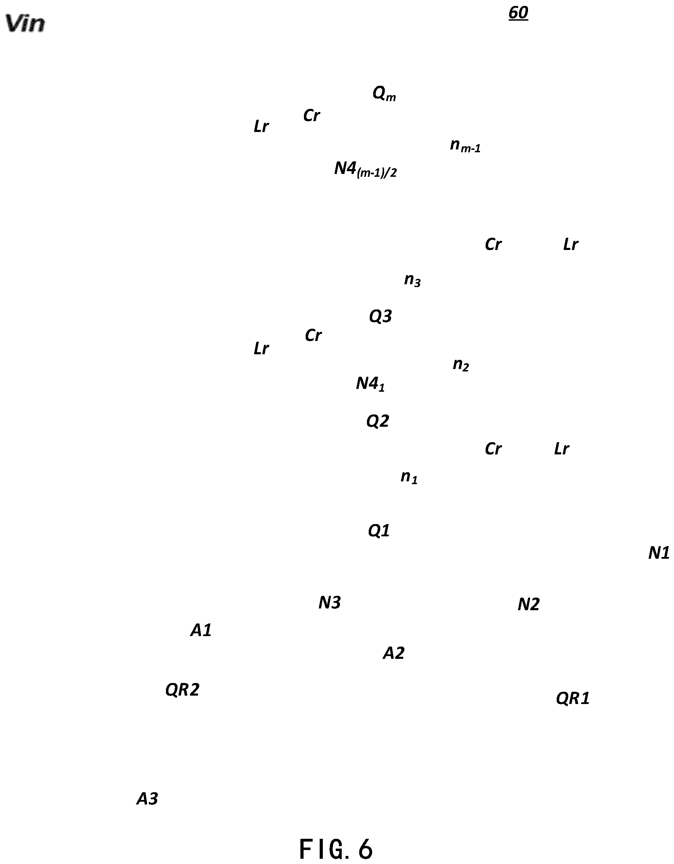

FIG. 5 illustrates that a part of resonant units of the (m-1) resonant units is connected to the corresponding connection node with even subscript and the second rectifying branch of the full-wave rectifier unit. In some embodiments, some windings can be further added to change the voltage conversion ratio. For example, FIG. 6 illustrates a circuit 60 according to another embodiment of the application.

Difference between the circuit 60 in FIG. 6 and the circuit 30 in FIG. 3 lies in that in addition to connecting the resonant units between the second rectifying branch of the full-wave rectifier unit and the connection node with even subscript, each of these resonant units is further connected in series to an additional winding N4 (windings $N4_1$ and $N4_{(m-1)/2}$ shown in FIG. 6).

Here as for the circuit 40 in FIG. 6, assuming that a turn ratio of the additional windings N4 (the windings $N4_1$ to $N4_{(m-1)/2}$), the winding N1, the winding N2 and the winding N3 in the transformer is N:N:1:1, when the other end of the resonant unit connected to the even-numbered connection node is connected to the midpoint A1, the voltage conversion unit is (2×(m-1)×N+2m-1):1, when the other end of the resonant unit connected to the even-numbered connection node is connected to the point A2, the voltage conversion unit is (2×(m-1)×N+m):1, and when the other end of the resonant unit connected to the even-numbered connection node is connected to the point A3, the voltage conversion unit is (2×(m-1)×N+m):1, thereby further expanding the conversion ratio of the conversion circuit based on the circuit 50 in FIG. 5.

Similarly, other suitable turn ratio can be chosen for the winding N1, the winding N2, the winding N3 and the windings N4. In a more general case, when the other end of the resonant unit connected to the even-numbered connection node is connected to the midpoint A1, the voltage conversion ratio of the circuit 60 can be determined by formula (11), when the other end of the resonant unit connected to the even-numbered connection node is connected to the point A2, the voltage conversion ratio of the circuit 60 can be determined by formula (12), and when the other end of the resonant unit connected to the even-numbered connection node is connected to the point A3, the voltage conversion ratio of the circuit 60 can be determined by formula (13):

$$\left[\frac{\frac{(m-1)*(K1+K3)}{2}+\sum_{i=1}^{\frac{m-1}{2}} K4_i}{K2} + \frac{\frac{(m-1)*(K1+K2)}{2}+\sum_{i=1}^{\frac{m-1}{2}} K4_i}{K3} + m\right]:1 \qquad (11)$$

$$\left[\frac{\frac{(m-1)}{2}*K1+\sum_{i=1}^{(m-1)/2}K4_i}{K2}+\frac{\frac{(m-1)*(K1+K2-K3)}{2}+\sum_{i=1}^{(m-1)/2}K4_i}{N3}+m\right]:1 \qquad (12)$$

$$\left[\frac{\frac{(m-1)*K1}{2}+\sum_{i=1}^{\frac{m-1}{2}}K4_i}{K2}+\frac{\frac{(m-1)*(K1+K2)}{2}+\sum_{i=1}^{\frac{m-1}{2}}K4_i}{K3}+\frac{m+1}{2}\right]:1 \qquad (13)$$

In the formulas (11)-(13), K1, K2 and K3 are the number of turns of the winding N1, the winding N2 and the winding N3, respectively, $K4_i$ is the number of turns of the respective windings N4, and m is the number of switches in the circuit 60. Similarly, it is unnecessary to dispose the winding N1 in some other embodiments.

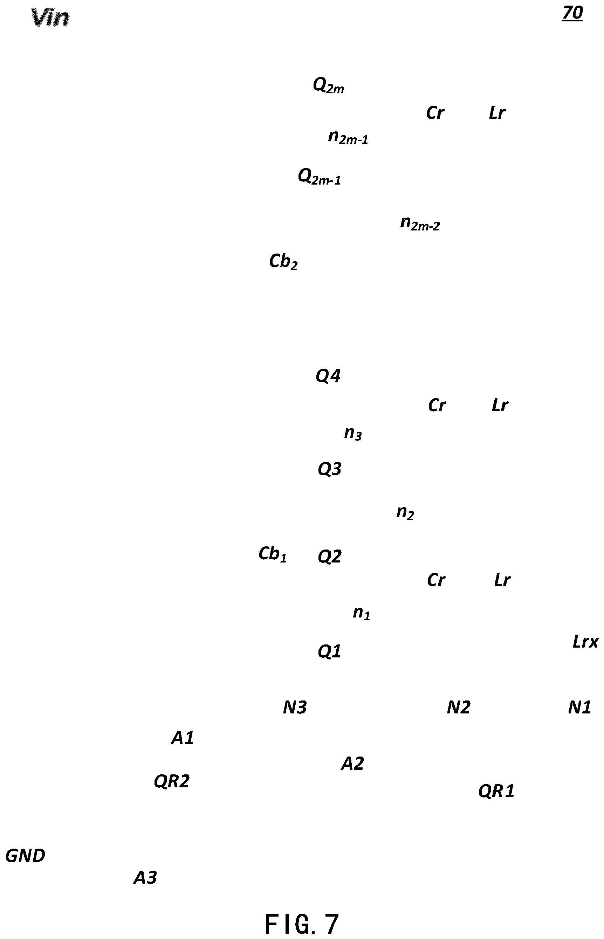

FIG. 7 illustrates an exemplary circuit 70 according to the conversion circuit in another embodiment of the application.

Difference between the circuit 70 and the circuit 30 in FIG. 3 lies in adding an inductor Lrx connected in series to the winding N1. Here a resonant frequency is:

$$fr = 1/\left(2\pi \times \sqrt{((Lr + 2 \times Lrx) \times Cr)}\right)$$

The inductor Lrx can be leakage inductance of the transformer. The inductance of the resonant inductor Lr can be reduced by using leakage inductance of the transformer, thereby decreasing use of components, and reducing volume of the converter.

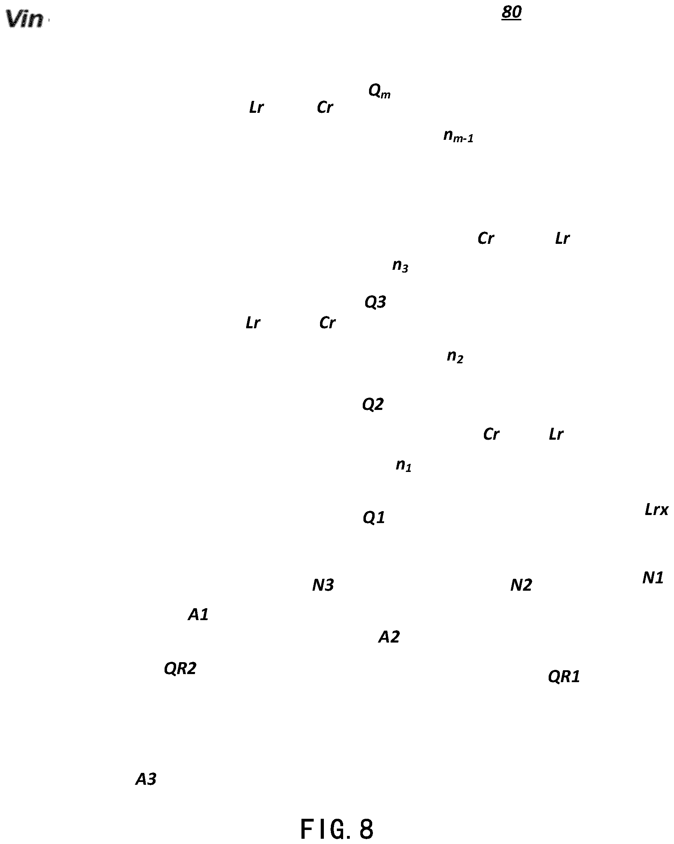

Although FIG. 7 is modified on the basis of the circuit 30 in FIG. 3, it shall be noticed that similar modifications can also be made to the circuit 50 in FIG. 5, as shown in FIG. 8. Here details are not described.

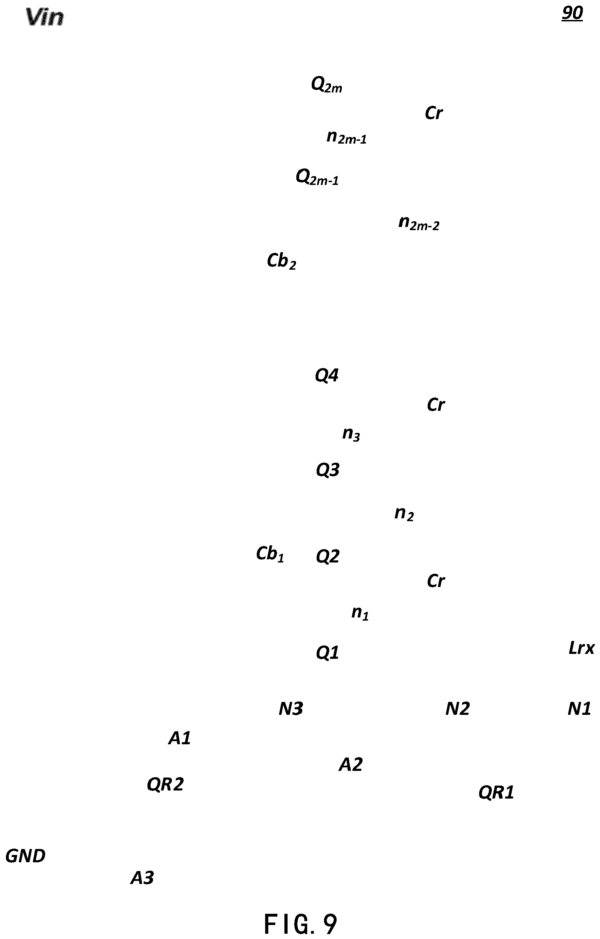

FIG. 9 illustrates an exemplary circuit 90 according to the conversion circuit in another embodiment of the application.

Difference between the circuit 90 and the circuit 30 in FIG. 3 lies in that when resonance parameters of the m resonant units are the same, respective resonant inductors in these resonant units can be combined into an inductor Lrx to be connected in series to the winding N1. Here a resonant frequency is:

$$fr = 1/\left(2\pi \times \sqrt{(2 \times Lrx \times Cr)}\right)$$

In this situation, the circuit is operated at a fixed working frequency, leakage inductance required is small, and leakage inductor of the transformer can be directly used as the resonant inductor Lrx, thereby reducing number and volume of the components.

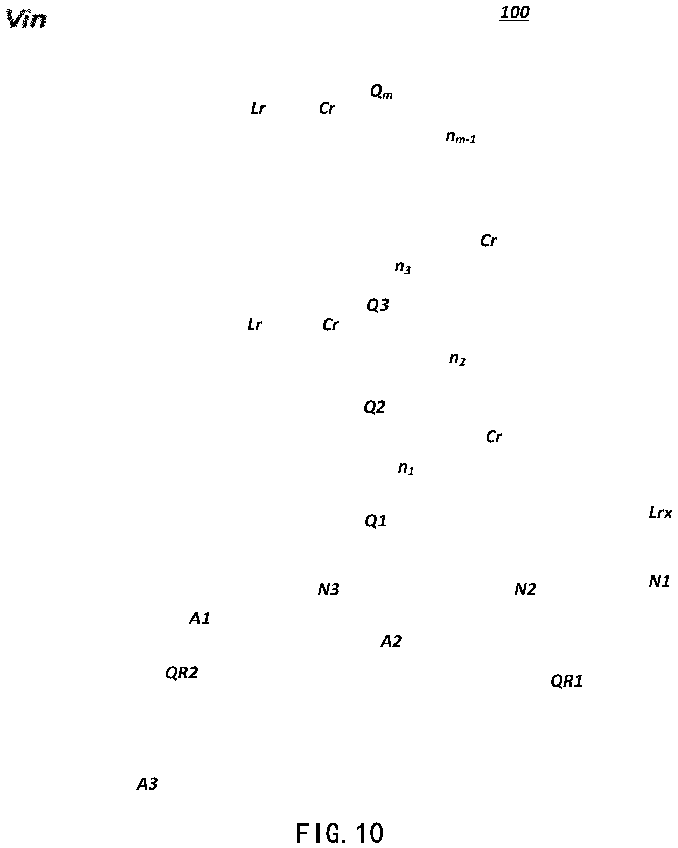

Although FIG. 9 is modified on the basis of the circuit 30 in FIG. 3, it shall be noticed that similar modifications can also be made to the circuit 50 in FIG. 5, as shown in FIG. 10. Here details are not described.

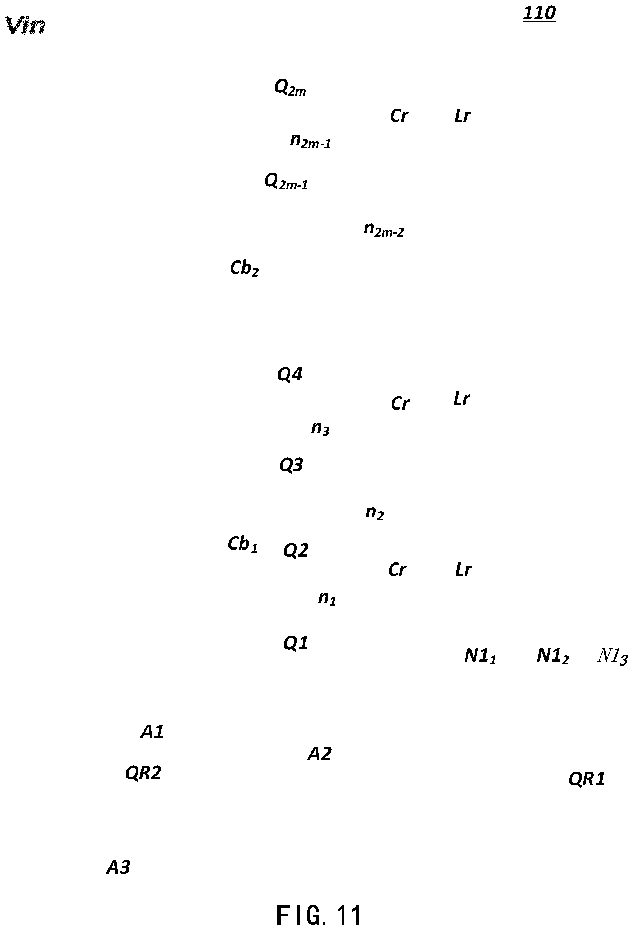

FIG. 11 illustrates an exemplary circuit 110 according to the conversion circuit in another embodiment of the application.

Difference between the circuit 110 and the circuit 30 in FIG. 3 lies in that the transformer has a plurality of windings (windings $N1_1$, $N1_2$ and $N1_3$ shown in FIG. 11) connected in series to the m resonant units. The circuit can also achieve the function of saving the resonant inductor by using leakage inductor of the transformer.

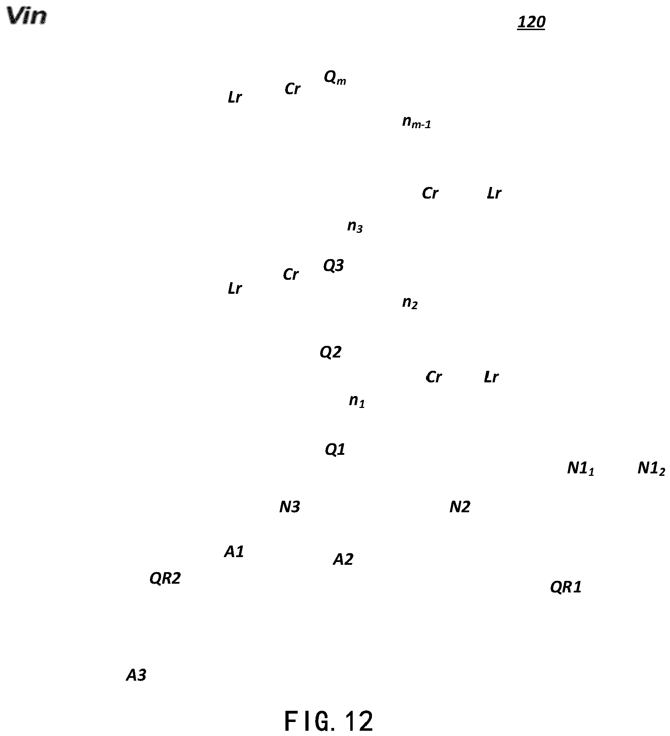

Although FIG. 11 is modified on the basis of the circuit 50 in FIG. 5, it shall be noticed that similar modifications can also be made to the circuit 50 in FIG. 5, as shown in FIG. 12. Here details are not described.

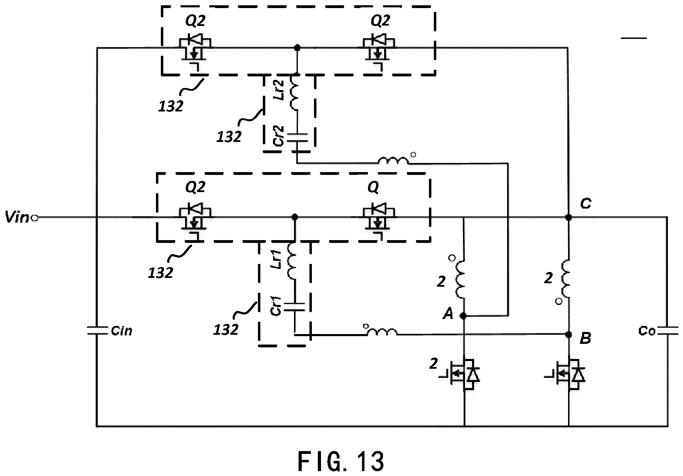

FIG. 13 illustrates an exemplary circuit 130 according to the conversion circuit in another embodiment of the application.

Difference between the circuit 130 in FIG. 13 and the circuit 20 in FIG. 2A lies in that the circuit 130 has two switching circuits 132 and 132' connected in parallel. The switching circuit 132 has switches Q1 and Q2 connected in series, and the switching circuit 132' has switches Q3 and Q4 connected in series.

A resonant unit 133 is connected between a connection node of the switches Q1 and Q2 and a midpoint B of the switch QR1 and the winding N2 of the first rectifying branch of the full-wave rectifier unit after being connected in series to the winding $N1_1$, and a resonant unit 133' is connected between a connection node of the switches Q3 and Q4 and a midpoint A of the switch QR2 and the winding N3 of the second rectifying branch of the full-wave rectifier unit after being connected in series to the winding $N1_2$.

In operation of the circuit 130, Q2, QR2 and Q3 are turned on simultaneously, and QR1, Q1 and Q4 are complementarily turned on, and a duty ratio is about 0.5. A turn ratio of the windings $N1_1$, N2, N3 and $N1_2$ of the transformer is N:1:1:N, and the circuit 130 can also realize a voltage conversion ratio of (2N+1+2):1. As compared to the circuit 20 shown in FIG. 2A, an additional switching circuit is added in the circuit 130. The additional switching circuit which includes switches Q3 and Q4 connected in series, is connected between the first end of the power supply and the first end of the load. The branch which includes the resonant unit 133' and the winding $N1_2$ connected in series, is connected between the node connecting the switches Q3 and Q4 and the node connecting the winding N3 and QR2. The switching circuit 133' and the switching circuit 133 work alternatively, such that current stresses of the switches Q1-Q4 are a half of that of the switches Q1 and Q2 in the circuit 20 of FIG. 2A, and currents of the rectifying switches QR1 and QR2 are more balanced.

## Claims

1.  A conversion circuit (20) for converting a voltage (Vin) of a power supply and powering a load by the converted voltage, the power supply and the load each comprising a first end and a second end, and the second end of the power supply being connected to the second end of the load, **characterized by**, the conversion circuit comprising:

    a full-wave rectifier circuit (21) connected in parallel to the load having a first rectifying branch and a second rectifying branch connected in parallel, the first rectifying branch having a first rectifying switch (QR1) and a first winding (N2) connected in series, the first rectifying switch and the first winding being connected to form a first midpoint(B), the second rectifying branch having a second rectifying switch (QR2) and a second winding (N3) connected in series, the second rectifying switch and the second winding being connected to form a second midpoint(A1), wherein the first winding (N2) and the second winding (N3) are coupled to each other;
    a first switching circuit (22) being directly connected between the first end of the power supply and the first end of the load, and comprising a first switch (Q1) and a second switch (Q2) connected in series to form a first connection node (n1); and
    a first resonant unit (23) coupled between the first connection node and the first midpoint.

2.  The conversion circuit according to claim 1, further comprising:
    a third winding (N1) connected with the first resonant unit (23) in series and electrically coupled between the first connection node and the first midpoint, wherein the third winding (N1), the first winding (N2) and the second winding (N3) are coupled to one another.

3.  The conversion circuit according to claim 1, wherein,

    the first switching circuit further comprises (2m-2) switches connected in series to the first switch and the second switch, such that the first switching circuit comprises 2m switches (Q1, Q2, ..., $Q_{2m}$) connected in series, wherein adjacent switches of the 2m switches are connected to form connection nodes (n1, n2, ..., $n_{2m-1}$),
    the conversion circuit further comprises:
    (m-1) resonant units ($34_1$, ..., $34_{m-1}$), the (m-1) resonant units and the first resonant units forming m resonant units, the x-th resonant unit of the m resonant units being connected in series to the third winding and being electrically coupled between the connection node of the (2x-1)th switch and the 2x-th switch of the 2m switches and the first midpoint; and
    (m-1) energy storage units each comprising an energy storage element, the k-th energy storage unit of the (m-1) energy storage units having one end connected to a connection node of the 2k-th switch and the (2k+1)th switch of the 2m switches, and the other end connected to the second rectifying branch, where
    m, x and k are integers, m≥2, 1≤x≤m and 1≤k≤(m-1).

4.  The conversion circuit according to claim 3, wherein the other end of each of the (m-1) energy storage units is connected to one of:

    the first end (A2) of the load;
    the second midpoint (A1); and
    the second end (A3) of the load.

5. The conversion circuit according to claim 1, wherein,

the first switching circuit further comprises (m-2) switches connected in series to the first switch and the second switch, such that the first switching circuit comprises m switches (Q1, Q2, ..., $Q_m$) connected in series, wherein adjacent switches of the m switches are connected to form connection nodes,
the conversion circuit further comprises (m-2) resonant units ($54_1$, $54_2$, ..., $54_{m-2}$), the (m-2) resonant units and the first resonant unit (53) forming (m-1) resonant units,
the (2y-1)th resonant unit of the (m-1) resonant units is connected in series to the third winding (N1) and electrically coupled between the connection node of the (2y-1)th switch and the 2y-th switch of the m switches and the first midpoint,
the 2z-th resonant unit of the (m-1) resonant units has one end connected to the connection node between the 2z-th switch and the (2z+1)th switch of the m switches, and the other end connected to the second rectifying branch, and
m is an odd number, y and z are integers, m≥3, 1≤y≤m/2 and 1≤z≤(m-1)/2.

6. The conversion circuit according to claim 5, wherein the other end of the 2z-th resonant unit of the (m-1) resonant units is connected to one of:

the first end (A2) of the load;
the second midpoint (A1); and
the second end (A3) of the load.

7. The conversion circuit according to claim 3, wherein each of the (m-1) capacitors is further connected in series to a fourth winding (N4), and the fourth winding (N4), the first winding (N2) and the second winding (N3) are coupled to one another.

8. The conversion circuit according to claim 5, wherein the 2z-th resonant unit of the (m-1) resonant units is further connected in series to a fifth winding (N4), and the fifth winding (N4), the first winding (N2) and the second winding (N3) are coupled to one another.

9. The conversion circuit according to claim 1, wherein,

the first switching circuit further comprises a third switch (Q3) and a fourth switch (Q4) connected in series to the first switch (Q1) and the second switch (Q2), the second switch and the third switch being connected to form a second connection node (n2), and the third switch and the fourth switch being connected to form a third connection node (n3),
the conversion circuit further comprises:

a first energy storage unit comprising an energy storage element (Cb), and having one end connected to the second connection node, and the other end connected to the second rectifying branch; and
a second resonant unit electrically coupled between the second connection node (n2) and the first midpoint.

10. The conversion circuit according to claim 9, further comprising a common inductor (Lrx) via which the first resonant unit and the second resonant unit are connected to the first midpoint.

11. The conversion circuit according to claim 9, wherein the first resonant unit and the second resonant unit share a resonant inductor (Lrx).

12. The conversion circuit according to any one of claims 9-11, further comprising a third winding (N1), wherein the first resonant unit is connected in series to the third winding and electrically coupled between the first connection node (n1) and the first midpoint(B), the second resonant unit is connected in series to the third winding and electrically coupled between the second connection node (n2) and the first midpoint(B), and the third winding, the first winding and the second winding are coupled to one another.

13. The conversion circuit according to claim 1, wherein,

the first switching circuit further comprises a third switch (Q3) and a fourth switch (Q4) connected in series to the first switch (Q1) and the second switch (Q2), the second switch and the third switch being connected to form a second connection node (n2), and the third switch and the fourth switch being connected to form a third connection node (n3),

the conversion circuit further comprises:

a first energy storage unit comprising an energy storage element (Cb), and having one end connected to the second connection node, and the other end connected to the second rectifying branch; and

a second resonant unit electrically coupled between the third connection node (n3) and the first midpoint(B).

14. The conversion circuit according to claim 13, further comprising:

a third winding ($N1_1$) electrically connected in series to the first resonant unit and coupled between the first connection node and the first midpoint; and

a sixth winding ($N1_2$) electrically connected in series to the second resonant unit and coupled between the third connection node and the first midpoint;

wherein the sixth winding ($N1_2$), the third winding ($N1_1$), the first winding (S1) and the second winding (S2) are coupled to one another.

15. The conversion circuit according to claim 9 or 13, wherein the first resonant unit and the second resonant unit have the same resonant frequency.

16. The conversion circuit according to claim 1, further comprising a second switching circuit (132') and a third resonant unit (133'), wherein,

the second switching circuit is connected in parallel to the first switching circuit (132), and comprises a fifth switch (Q3) and a sixth switch (Q4) connected in series to form a fourth connection node,

the third resonant unit electrically coupled between the fourth connection node and the second midpoint(A1).

17. The conversion circuit according to one of the preceding claims, further comprising:

a third winding ($N1_1$) electrically connected in series to the first resonant unit and coupled between the first connection node and the first midpoint; and

a seventh winding ($N1_2$) electrically connected in series to the third resonant unit and coupled between the fourth connection node and the second midpoint.

FIG. 1

FIG. 2A

FIG. 2B

*Vin*

*Q2*

*Q1*

Third Path

*N1*

*N3*

*N2*

*QR2*

Fourth
Path

*QR1*

FIG. 2C

| Q2 | QR2 | Q1 | QR1 |

I<sub>Lr</sub>

I<sub>Lm</sub>

$V_{Q1}$

Is1

Is2

t0    t1 t2    t3 t4

FIG. 2D

*Vin* <u>30</u>

$34_{m-1}$

$Q_{2m}$

| $Cr$ | $Lr$ |

$n_{2m-1}$

$Q_{2m-1}$

$n_{2m-2}$

$Cb_{m-1}$

$34_1$

$Q4$

| $Cr$ | $Lr$ |

$n_3$

$Q3$

$n_2$

$33$

$Cb_1$ $Q2$

| $Cr$ | $Lr$ |

$n_1$

$Q1$

$N1$

$N3$ $N2$

$A1$

$A2$

$QR2$ $QR1$

$A3$

FIG. 3

*Vin* <u>40</u>

$Q_{2m}$

$Cr$  $Lr$

$n_{2m-1}$

$Q_{2m-1}$

$n_{2m-2}$

$Cb_{m-1}$  $N4_{m-1}$

$Q4$

$Cr$  $Lr$

$n_3$

$Q3$

$n_2$

$Cb_1$  $N4_1$

$Q2$

$Cr$  $Lr$

$n_1$

$Q1$

$N1$

$N3$  $N2$

$A1$

$A2$

$QR2$  $QR1$

$A3$

FIG. 4

*Vin*

$50$

$54_{m-2}$

$Q_m$

Lr   Cr

$n_{m-1}$

$54_2$

Cr   Lr

$n_3$

$54_1$

$Q3$

Lr   Cr

$n_2$

Q2

$53$

Cr   Lr

$n_1$

Q1

N1

N3

N2

A1

A2

QR2

QR1

A3

FIG. 5

Vin

_60_

$Q_m$

Cr

Lr

$n_{m-1}$

$N4_{(m-1)/2}$

Cr        Lr

$n_3$

Q3

Cr

Lr

$n_2$

$N4_1$

Q2

Cr        Lr

$n_1$

Q1

N1

N3            N2

A1

A2

QR2            QR1

A3

# FIG. 6

Vin

<u>70</u>

$Q_{2m}$

Cr    Lr

$n_{2m-1}$

$Q_{2m-1}$

$n_{2m-2}$

$Cb_2$

$Q4$

Cr    Lr

$n_3$

$Q3$

$n_2$

$Cb_1$    $Q2$

Cr    Lr

$n_1$

Lrx

$Q1$

N3            N2        N1

A1

A2

QR2            QR1

GND

A3

FIG. 7

Vin

<u>80</u>

$Q_m$

Lr        Cr

$n_{m-1}$

Cr        Lr

$n_3$

Q3

Lr        Cr

$n_2$

Q2

Cr        Lr

$n_1$

Q1

Lrx

N3                    N2                    N1

A1

A2

QR2                                    QR1

A3

# FIG. 8

*Vin*

<u>*90*</u>

$Q_{2m}$

*Cr*

$n_{2m-1}$

$Q_{2m-1}$

$n_{2m-2}$

$Cb_2$

*Q4*

*Cr*

$n_3$

*Q3*

$n_2$

$Cb_1$　*Q2*

*Cr*

$n_1$

*Q1*

*Lrx*

*N3*　　　　*N2*　　*N1*

*A1*

*A2*

*QR2*

*QR1*

*GND*

*A3*

FIG. 9

*Vin*

*100*

$Q_m$

*Lr*  *Cr*

$n_{m-1}$

*Cr*

$n_3$

*Q3*

*Lr*  *Cr*

$n_2$

*Q2*

*Cr*

$n_1$

*Q1*

*Lrx*

*N3*  *N2*  *N1*

*A1*

*A2*

*QR2*

*QR1*

*A3*

FIG. 10

*Vin*

*110*

$Q_{2m}$

$Cr$ $Lr$

$n_{2m-1}$

$Q_{2m-1}$

$n_{2m-2}$

$Cb_2$

$Q4$

$Cr$ $Lr$

$n_3$

$Q3$

$n_2$

$Cb_1$ $Q2$

$Cr$ $Lr$

$n_1$

$Q1$

$N1_1$ $N1_2$ $N1_3$

$A1$

$A2$

$QR2$

$QR1$

$A3$

FIG. 11

Vin                                                              <u>120</u>

Q_m
Cr
Lr

$n_{m-1}$

Cr        Lr

$n_3$

Cr    Q3
Lr
$n_2$

Q2
Cr        Lr
$n_1$

Q1
$N1_1$        $N1_2$

N3                        N2

A1              A2
QR2                                      QR1

A3

FIG. 12

FIG. 13